# EUROPEAN PATENT APPLICATION

(11) **EP 3 988 473 A1**
(43) Date of publication of application: **27.04.2022**
(21) Application number: 21816760.9
(22) Date of filing: 13.05.2021
(51) Int. Cl.: B65D 85/32

(54) **PACKAGE FOR STORING EGGS**

(30) Priority: 02.06.2020 RU 2020118144
(71) Applicant: Forpet S.A.R.L., 1511 Luxembourg (LU)
(72) Inventor: RASTORGUEV, Dmitrii Sergeevich, Moscow, 123154 (RU); NIKITENKO, Sergei Sergeevich, Khimki, 141406 (RU); TSIRKULEV, Mikhail Valerevich, Moscow, 109544 (RU)
(74) Representative: Spengler, Robert
(86) International application number: PCT/RU2021/050130
(87) International publication number: WO 2021/246914

(57) **Abstract**

The invention relates to the field of storage containers used for the accommodation and delivery of eggs or similar fragile items.

The objective set by the author of a novel egg storage tray is to eliminate the disadvantages of the prior art analogues. The technical result consists in creating the egg tray that surpasses the analogues in physical and mechanical properties and allows the egg trays based on expanded primary and/or recycled (obtained from polyethylene terephthalate waste) polyethylene terephthalate to be recycled as many times as one sees fit. This technical result is achieved by the whole set of essential features.

The essence of the invention is that an egg storage tray comprises a base having storage compartments on an inner side of the base, a lid pivotally connected to the base, and a latch configured as a hole provided in the lid and a protrusion provided on the base. The base with the latch and the lid are made of expanded polyethylene terephthalate having a density ranging from 100 kg/m³ to 900 kg/m³ and an intrinsic viscosity ranging from 0.5 dl/g to 1.0 dl/g.

## Description

### TECHNICAL FIELD OF THE INVENTION

The invention relates to the field of storage containers used for the accommodation and delivery of eggs or similar fragile items.

### BACKGROUND OF THE INVENTION

Technical solutions for egg containers are known from RU 86175, EP 2736821, US 3346171, US 4059219, NL 1025636, US 2600130, US 4795080, DE 60300073 T2, RU 2500596, US 7255231, US 7258234, US 2006006049, KR 1020090079361, RU 79090. The main technical solutions for egg containers consist in obtaining products that have egg dimples and latches for closing the products and are made of recycled pressed paper and/or cardboard, polypropylene, polystyrene, expanded or non-expanded polyethylene terephthalate (PET). An egg container comprises a base connected to a lid along a fold line (scoring line) and configured as a tray of generally rectangular shape. The tray has one or more rows of semi-ellipsoidal egg dimples separated by walls and having a cylindrical base. There are separating stops provided in the tray between the dimples, the separating stops being provided at a height higher than a flanged edge of the tray. Gaps are formed between the dimples, dampers are molded on the walls, and a reinforcement rib is usually made around the tray perimeter in the form of a flanged edge. The lid is generally configured as a bottomless container in the form of a truncated quadrangular pyramid having a flanged edge along its perimeter. Each dimple has a bottom that is generally concave towards the inside of the dimple to provide an additional damping effect. The lid has two transversely elongated recesses forming protrusions directed inward to rest on the separating stops in the tray when the lid is closed. The flanged edge on the tray mainly has a stepped shape, and the flanged edge on the lid has a reciprocal shape. The disadvantages of these types of trays are as follows: the limited reuse of egg trays made from the commonly-accepted materials due to a significant deterioration in the properties of polymers (polystyrene and/or polypropylene and/or non-expanded PET) during a recycling process; the hygroscopicity of paper and/or cardboard-based egg trays; the complicated recycling process of paper and/or cardboard-based egg trays due to reduced fiber length and the use of environmentally hazardous chemicals; the long-term natural decomposition of wasted egg trays due to the polymers used therein (polystyrene and/or polypropylene and/or non-expanded PET); the use of paper and/or cardboard in the trays leads to the destruction of the Earth's global forest resources and to an increase in the carbon footprint in the Earth's atmosphere.

### SUMMARY OF THE INVENTION

The objective set by the author of a novel egg storage tray is to eliminate the disadvantages of the prior art analogues. The technical result consists in creating an egg tray that surpasses the analogues in physical and mechanical properties and allows the egg trays based on expanded primary and/or recycled (obtained from polyethylene terephthalate waste) polyethylene terephthalate to be recycled as many times as one sees fit. This technical result is achieved by the whole set of essential features.

The essence of the invention is that an egg storage tray comprises a base having storage compartments on an inner side of the base, a lid pivotally connected to the base, and a latch configured as a hole provided in the lid and a protrusion provided on the base. The base with the latch and the lid are made of expanded polyethylene terephthalate having a density ranging from 100 kg/m³ to 900 kg/m³ and an intrinsic viscosity ranging from 0.5 dl/g to 1.0 dl/g. Additionally, the expanded polyethylene terephthalate has a thickness ranging from 100 µm to 2000 µm. Furthermore, expanded recycled polyethylene terephthalate is used as the expanded polyethylene terephthalate.

### BRIEF DESCRIPTION OF THE DRAWING

The invention is explained by the drawings, in which:

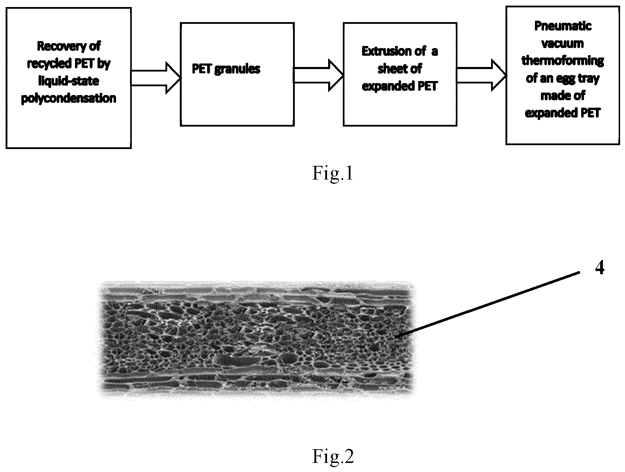

FIG. 1 schematically shows a process of manufacturing an egg tray based on expanded polyethylene terephthalate;
FIG. 2 shows a structure of expanded polyethylene terephthalate;

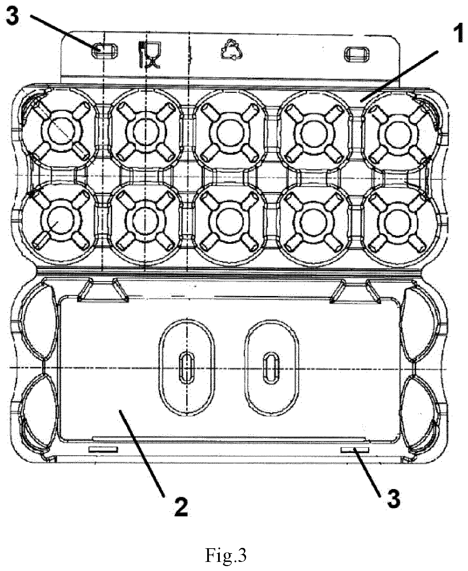

FIG. 3 shows one of embodiments of the egg tray.

### DETAILED DESCRIPTION OF THE INVENTION

An egg storage tray comprises a base 1, a lid 2, and a latch 3 for fixing the lid 2 on the base 1. The base 1 with the latch 3 and the lid 2 are made of a sheet 4 of expanded polyethylene terephthalate which retains a sufficient strength to withstand a load and provide necessary physical and mechanical properties for the preservation of eggs during storage and transportation. There are compartments provided on the inner side of the base 1, which have a shape at least partially corresponding to the outer shape of an egg. The lid 2 and the base 1 are pivotally connected by a hinge formed by a scoring and/or notch along a fold line between the base 1 and the lid 2. The latch 3 has a hole provided in the lid 2 and a protrusion provided on the base 1. If required, a label is attached to the egg storage tray on its outer side. The sheet 4 of expanded polyethylene terephthalate has a density ranging from 100 kg/m³ to 900 kg/m³ and an intrinsic viscosity (IV) ranging from 0.5 dl/g (deciliters/gram) to 1.0 dl/g. The sheet 4 of expanded polyethylene terephthalate has a thickness ranging from 100 µm to 2000 µm. Expanded recycled polyethylene terephthalate may be also used. The expanded recycled polyethylene terephthalate is obtained from polyethylene terephthalate (PET) waste by performing several recycling steps, namely: - washing, purifying the PET waste; - crushing, separating the crushed PET waste according to polymer types and colors; - extruding a polyethylene terephthalate melt; - performing PET liquid-state polycondensation. The PET liquid-state polycondensation is based on the inherent ability of PET to condense in a molten state under vacuum. The condensation leads to an increase in the intrinsic viscosity. High-efficiency vacuum effectively removes harmful chemical impurities from the material, making it possible for the recycled material to be used for 100% safe contact with food products. As the molten PET enters a vertical portion of P:REACT (an LSP reactor), filaments are produced, which form a corresponding surface in volumetric relation. The material is then collected in a horizontal drum and slowly moved forward. The condensation process begins immediately after the production of the filaments and continues until the PET leaves the LSP reactor. An increase in the intrinsic viscosity is controlled by the residence time and degree of vacuum of the molten PET in the LSP reactor, and therefore may be set to a desired level. Parameter settings allow a control unit to maintain a predetermined intrinsic viscosity level within a narrow tolerance range. The process of removing impurities is very effective as it is performed in the liquid state of PET. Not only the purification efficiency of the material that exceeds the limits set by food industry standards is provided, but also lubricants are effectively removed from the fibers during the purification process. An increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed under high-effective vacuum. The high removal rate of the impurities allows the LSP reactor to be utilized in a variety of applications, providing its high operational flexibility. The favorable conditions created in the LSP reactor (temperature/a melt surface-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability.

The method of manufacturing the egg storage tray is as follows. Rolls of expanded polyethylene terephthalate are obtained from granules of polyethylene terephthalate by using an extrusion technique and, additionally, by means of physical foaming with gases - nitrogen and/or carbon dioxide, or their mixture. Further, the rolls including at least the sheet 4 of expanded polyethylene terephthalate are mounted on an unwinding unit of a thermoforming machine. At the next step, the material is heated in the thermoforming machine to a softening temperature, and egg storage trays are then molded mainly by means of pneumatic vacuum thermoforming. At the next step, scoring and/or notching is performed along the fold line between the base 1 and the lid 2. After that, the egg storage trays themselves are cut from the material and stacked for subsequent placement in boxes.

### Industrial applicability

The claimed invention allows one to manufacture egg trays comprising a main carrier layer of expanded polyethylene terephthalate and fully recycle the wasted egg trays based on the material comprising the main carrier layer of expanded polyethylene terephthalate by means of crushing and subsequent liquid-state polycondensation of polyethylene terephthalate, thereby restoring the properties of polyethylene terephthalate to those of primary raw materials. The claimed invention allows one to recycle the egg trays comprising the main carrier layer of expanded polyethylene terephthalate as many times as one sees fit. In most cases, the claimed invention allows one to manufacture the egg trays from expanded polyethylene terephthalate having physical and mechanical characteristics better than those of similar egg trays based on polystyrene and/or expanded polystyrene and/or polypropylene and/or non-expanded PET, cardboard and/or paper. The claimed invention has better physical and mechanical properties, allows one to recycle the egg trays an unlimited number of times and is cheaper in cost, depending on an expansion coefficient and depending on the intrinsic viscosity of involved polyethylene terephthalate. Thus, the claimed invention improves the performance characteristics of the product.

## Claims

1. An egg storage tray comprising:
a base having storage compartments on an inner side of the base,
a lid pivotally connected to the base, and
a latch configured as a hole provided in the lid and a protrusion provided on the base,
wherein the base with the latch and the lid are made of expanded polyethylene terephthalate having a density ranging from 100 kg/m³ to 900 kg/m³ and an intrinsic viscosity ranging from 0.5 dl/g to 1.0 dl/g.

2. The egg storage tray of claim 1, wherein the expanded polyethylene terephthalate has a thickness ranging from 100 µm to 2000 µm.

3. The egg storage tray of claim 1, wherein expanded recycled polyethylene terephthalate is used as the expanded polyethylene terephthalate.
